Europäisches Patentamt

European Patent Office

Office européen des brevets

(19)

(11) Publication number: **0 164 883**
**A2**

(12) # EUROPEAN PATENT APPLICATION

(21) Application number: **85303203.5**

(22) Date of filing: **03.05.85**

(51) Int. Cl.⁴: **C 08 F 2/00**

(30) Priority: **07.05.84 JP 90463/84**

(43) Date of publication of application:
**18.12.85 Bulletin 85/51**

(84) Designated Contracting States:
**DE FR GB IT**

(71) Applicant: **Shin-Etsu Chemical Co., Ltd.**
**6-1, Ohtemachi 2-chome**
**Chiyoda-ku, Tokyo100(JP)**

(72) Inventor: **Shimizu, Toshihide**
**E-702 3-3, Tomioka**
**Urayasu-shi Chiba-ken(JP)**

(72) Inventor: **Kaneko, Ichiro**
**Shin-Etsu Kagaku Shataku 1-308, 9809-7 Yatabe**
**Hazaki-cho Kashima-gun Ibaraki-ken(JP)**

(72) Inventor: **Shimakura, Yoshiteru**
**2725-4 Hiraizumi Kamisu-cho**
**Kashima-gun Ibaraki-ken(JP)**

(74) Representative: **Thomas, Roger Tamlyn et al,**
**D. Young & Co. 10 Staple Inn**
**London WC1V 7RD(GB)**

(54) A method for the polymerization of a vinylic monomer.

(57) The invention provides an efficient means for preventing deposition of polymer scale on the reactor walls in the so-called "water polymerization" of an ethylenically unsaturated monomer in an aqueous medium carried out without addition of any emulsifying agent or suspending agent. The inventive method comprises, prior to the introduction of the polymerization mixture into the polymerization reactor, coating the reactor walls with a solution containing an organic dye compound, preferably, with a mixture of a silicic acid compound followed by drying.

EP 0 164 883 A2

0164883

# A METHOD FOR THE POLYMERIZATION OF A VINYLIC MONOMER

## BACKGROUND OF THE INVENTION

The present invention relates to an improved method for the polymerization of a vinylic monomer in an aqueous polymerization medium or, more particularly, to a method for the polymerization of a vinylic monomer in an aqueous polymerization medium in the absence of any emulsifying or suspending agent according to which deposition of polymer scale on the reactor walls can be greatly reduced.

As is well known, vinylic monomers such as vinyl chloride are usually polymerized by the mechanism of the free-radical polymerization in an aqueous polymerization medium by the well established procedure of emulsion polymerization in an aqueous medium containing an emulsifying agent or suspension polymerization in an aqueous medium containing a suspending agent. In view of the adverse influences on the properties of the product polymer caused by the emulsifying or suspending agent, on the other hand, a polymerization process of so-called "water polymerization" is sometimes undertaken when a particularly superior properties are desired of the polymer product usable for the preparation of films, fibers and the like articles. One of the most serious problems in these polymerization method including the "water polymerization" is deposition of polymer scale on the surface of the reactor walls, stirrer and the like coming into contact with the monomer during polymerization.

When a vinylic monomer is polymerized by the "water polymerization", namely, a large amount of polymer scale is deposited on the surfaces of the reactor walls, stirrer and the like coming into contact with the monomer so that various disadvantages are caused that not only the yield of the polymer product is decreased and the cooling capacity of the polymerization reactor is decreased leading to a reduction of productivity of the facilities but also the polymer scale coming off the reactor walls eventually enters the polymer product resulting in a degraded quality of the product. In addition, cleaning works of the polymerization reactor having the polymer scale deposition to prepare for the next run take a great deal of labor and time and also cannot be free from the most serious problem on the workers' health due to the toxicity of the vinylic monomer such as vinyl chloride and acrylonitrile absorbed and contained in a considerable amount in the deposition of polymer scale.

## SUMMARY OF THE INVENTION

Ways were therefore sought of providing a novel and improved method for the polymerization of a vinylic monomer by the technique of so-called "water polymerization", i.e. substantially in the absence of any emulsifying and suspending agents in the aqueous polymerization medium without the above described problems caused by the deposition of polymer scale on the reactor walls, etc.

A method for the polymerization of a vinylic monomer in an aqueous polymerization medium by the procedure of water polymerization, according to the invention, comprises:
(a) coating the surface of the reactor walls with a solution containing an organic dye compound, preferably, with admixture of a silicic acid compound in an amount from 0.01 to 10 parts by weight per part by weight of the organic dye compound;
(b) drying the thus coated surface to form a coating film of the organic dye compound or a mixture of the organic dye compound and the silicic acid compound;
(c) introducing water, a vinylic monomer and a polymerization initiator without addition of an emulsifying agent and suspending agent, into the reactor to form a polymerization mixture; and
(d) heating the polymerization mixture under agitation to effect polymerization of the monomer.

DETAILED DESCRIPTION OF THE PREFERRED EMBODIMENTS

As is clear from the above description, the scope of the inventive method for the water polymerization of a vinylic monomer is in the coating of the reactor walls prior to the introduction of the polymerization mixture with a specific coating agent of which the essential ingredient is an organic dye compound or a combination of an organic dye compound and a silicic acid compound followed by the procedure of the water polymerization. This method of the invention is so effective in preventing deposition of polymer scale on the reactor walls that there is no limitation in respect of the material of the polymerization reactor including not only glass-lined vessels but also stainless steel-made vessels regardless of the types of the vinylic monomers and the polymerization initiators to give a great advantage in the industrial production of vinylic polymers. Accordingly, the polymerization reactions which conventionally can be performed only in a glass-lined polymerization reactor can be successfully performed in a stainless steel-made reactor which is less expensive and more productive than glass-lined ones in respect of the availability of very large vessels.

Though not fully understood, the mechanism of the polymer scale prevention by the inventive method is presumably that the coating film formed by the organic dye compound or a mixture of the same with a silicic acid compound has strong adhesion to the reactor walls which is effective in preventing adsorption of the species responsible for the deposition of polymer molecules and polymerization of the monomer on the reactor walls.

The types of the organic dye compound usable in the inventive method include direct dyes, acidic dyes, basic dyes, mordant dyes, sulfur dyes, vat dyes, disperse dyes, oil
soluble dyes and reactive dyes as well as fluorescent
brightening agents. Particular examples of these dye compounds are as follows.

Direct dyes: C.I. Direct Yellows 26, 28, 29, 44, 50, 86, 88,
89, 98 and 100; C.I. Direct Oranges 39, 51 and 107; C.I. Direct Reds 79, 80, 81, 83, 84, 89 and 218; C.I. Direct Greens
37 and 63; C.I. Direct Violets 47, 51, 90 and 94; C.I. Direct Blues 71, 78, 86, 90, 98, 106, 160, 194, 196, 202, 225,
226 and 246; C.I. Direct Browns 1, 95, 106, 170, 194 and
211; C.I. Direct Blacks 19, 32, 51, 75, 94, 105, 106, 107,
108, 113, 118 and 146; and the like.

Acidic dyes: C.I. Acid Yellows 7, 17, 23, 25, 40, 44, 72,
75, 98, 99, 114, 131 and 141; C.I. Acid Oranges 19, 45, 74,
85 and 95; C.I. Acid Reds 6, 32, 42, 52, 57, 75, 80, 94,
111, 114, 115, 118, 119, 130, 131, 133, 134, 145, 168, 180,
184, 194, 198, 217, 249 and 303; C.I. Acid Violets 34, 47
and 48; C.I. Acid Blues 15, 29, 43, 45, 54, 59, 80, 100,
102, 113, 120, 130, 140, 151, 154, 184, 187 and 229; C.I.
Acid Greens 7, 12, 16, 20, 44 and 57; C.I. Acid Browns 39
and 301; C.I. Acid Blacks 1, 2, 24, 26, 29, 31, 48, 52, 63,
131, 140 and 155; and the like.

Basic dyes: C.I. Basic Yellows 11, 14, 19, 21, 28, 33, 34,
35 and 36; C.I. Basic Oranges 2, 14, 15, 21 and 32; C.I.

Basic Reds 13, 14, 18, 22, 23, 24, 29, 32, 35, 36, 37, 38, 39 and 40; C.I. Basic Violets 7, 10, 15, 21, 25, 26 and 27; C.I. Basic Blues 9, 24, 54, 58 and 60; C.I. Basic Black 8; and the like.

Mordant dyes: C.I. Mordant Yellows 1, 23 and 59; C.I. Mordant Orange 5; C.I. Mordant Reds 21, 26, 63 and 89; C.I. Mordant Violet 5; C.I. Mordant Blues 1, 29 and 47; C.I. Mordant Green 11; C.I. Mordant Browns 1, 14 and 87; C.I. Mordant Blacks 1, 3, 7, 9, 11, 13, 17, 26, 38, 54, 75 and 84; and the like.

Sulfur dyes: C.I. Sulfur Oranges 1 and 3; C.I. Sulfur Blues 2, 3, 6, 7, 9 and 13; C.I. Sulfur Reds 3 and 5; C.I. Sulfur Greens 2, 6, 11 and 14; C.I. Sulfur Browns 7 and 8; C.I. Sulfur Yellow 4; C.I. Sulfur Black 1; C.I. Solubilized Sulfur Orange 3; C.I. Solubilized Sulfur Yellow 2; C.I. Solubilized Sulfur Red 7; C.I. Solubilized Sulfur Blue 4; C.I. Solubilized Sulfur Green 3; C.I. Solubilized Sulfur Brown 8; and the like.

Vat dyes: C.I. Vat Yellows 2, 4, 10, 20, 22 and 23; C.I. Vat Oranges 1, 2, 3, 5 and 13; C.I. Vat Reds 1, 10, 13, 16, 31 and 52; C.I. Vat Violets 1, 2 and 13; C.I. Vat Blues 4, 5 and 6; C.I. Solubilized Vat Blue 6; C.I. Vat Blues 14, 29, 41 and 64; C.I. Vat Greens 1, 2, 3, 8, 9, 43 and 44; C.I. Solubilized Vat Green 1; C.I. Vat Browns 1, 3, 22, 25, 39, 41, 44 and 46; C.I. Vat Blacks 9, 14, 25 and 27; and the like.

Disperse dyes: C.I. Disperse Yellows 1, 3 and 4; C.I. Disperse Reds 12 and 80; C.I. Disperse Blue 27; and the like.

Oil soluble dyes: C.I. Solvent Yellows 2, 6, 14, 19, 21, 33 and 61; C.I. Solvent Oranges 1, 5, 6, 14, 37, 44 and 45; C.I. Solvent Reds 1, 3, 8, 23, 24, 25, 27, 30, 49, 81, 82, 83, 84, 100, 109 and 121; C.I. Solvent Violets 1, 8, 13, 14, 21 and 27; C.I. Solvent Blues 2, 11, 12, 25, 35, 36, 55 and 73; C.I. Solvent Greens 1 and 3; C.I. Solvent Browns 3, 5, 20 and 37; C.I. Solvent Blacks 3, 5, 7, 22, 23 and 123; and the like.

Reactive dyes: C.I. Reactive yellows 1, 2, 7, 17 and 29; C.I. Reactive Oranges 1, 5, 7 and 14; C.I. Reactive Reds 3, 6 and 12; C.I. Reactive Blues 2, 4, 5, 7, 15 and 19; C.I. Reactive Green 7; C.I. Reactive Black 1; and the like.

Fluorescent brightening agents: C.I. Fluorescent Brightening Agents 24, 84, 85, 91, 162, 163, 164, 167, 169, 172, 174, 175 and 176; and the like.

These organic dye compounds may be used either singly or as a combination of two kinds or more according to need. In practicing the method of the present invention, the organic dye compound or compounds are dissolved in a suitable solvent according to their solubility behavior in a concentration of, for example, about 0.01 to 5 % by weight and the solution is applied to the surface of the reactor walls and other parts coming into contact with the monomer during polymerization followed by drying either by air blowing at room temperature or heating at a temperature of up to 100 °C to form a coating film on the surface.

The solvent suitable for the preparation of the coating solution is exemplified by water and organic solvents including alcoholic solvents, aliphatic and aromatic hydrocarbon solvents, halogenated hydrocarbon solvents, ketones, esters, ethers and the like and they can be used either singly or as a mixture of two kinds or more according to need.

In the method of the invention, the above described organic dye compound is preferably combined with a silicic acid compound in the coating solution and such a coating solution can provide a more remarkable effect for the polymer scale prevention with durability.

The above mentioned silicic acid compound includes a variety of silicic acid-related compounds such as colloidal silica, orthosilicic acid, metasilicic acid, mesodisilicic acid, mesotrisilicic acid, mesotetrasilicic acid, sodium metasilicate, potassium hydrogen disilicate, lithium orthosilicate, hexalithium orthodisilicate, water glass, 12-silicotungstic acid, iso-12-silicotungstic acid, 10-silicotungstic acid, potassium 12-silicotungstate, potassium iso-12-silicotungstate, potassium 10-silicotungstate, sodium 12-silicotungstate, sodium iso-12-silicotungstate, silicomolybdic acid, potassium silicomolybdate, sodium silicomolybdate and the like. The silicic acid compound is dissolved or dispersed in a small volume of water and added to the coating solution containing the organic dye compound. The amount of the silicic acid compound should usually be in the range from 0.01 to 10 parts by weight per part by weight of the organic dye compound.

The thus prepared coating solution can be applied to the reactor walls and other surfaces by any known method including brush coating, spray coating and the like. The coating amount should be at least 0.01 g/m$^2$ of the surface as dried in order to fully exhibit the desired effect of polymer scale prevention. When the reactor walls, stirrer and other parts have been provided on the surface with a dried coating film of the above described coating agent, water as the polymerization medium, a monomer or monomers, a polymerization initiator and other additives excepting emulsifying and suspending agents are introduced into the polymerization reactor to form a polymerization mixture and the polymerization reaction is started by heating the polymerization mixture at an appropriate temperature with agitation.

The method of the present invention is applicable to the "water polymerization" of various kinds of vinylic monomers or ethylenically unsaturated monomers including halogenated monomers such as vinyl chloride and vinylidene chloride, vinyl esters such as vinyl acetate, carboxylic acid monomers such as acrylic acid, methacrylic acid and itaconic acid as well as esters thereof such as methyl acrylate, methyl methacrylate and methyl $\alpha$-chloroacrylate, ketone monomers such as vinyl methyl ketone and $\alpha$-acetoxystyrene, ether monomers such as vinyl methyl ether, alkyl allyl ethers and allyl glycidyl ether, alcoholic monomers such as allyl alcohol, methallyl alcohol, $\alpha$-hydroxymethyl acrylonitrile and allyloxyethyl alcohol, hydrocarbon monomers such as styrene, $\alpha$-methylstyrene and isobutylene, amine monomers such as 2-vinylpyridine, 2-methyl-5-vinylpyridine and 2-vinylquinoline, amide monomers such as acrylamide, N-methylacrylamide, acrylonitrile and others.

The polymerization initiator used in the inventive method may be any one of known free-radical polymerization initiators including redox-type initiator systems composed of ammonium persulfate and a reducing agent such as sodium hydrogensulfite, sodium chlorate, sodium sulfite, hydrogen peroxide and iron(II) sulfate, persulfates such as potassium persulfate and ammonium sulfate, hydrogen peroxide, organic peroxides such as benzoyl peroxide and lauroyl peroxide, azo

compounds such as azobisisobutyronitrile, and others. The polymerization reaction is performed at a temperature in the range from 20 to 90 °C according to the type of the polymerization reaction.

In the following, the method of the present invention is described in more detail by way of examples.

Example 1 (Experiments No. 1 to No. 17).

In each of the experiments excepting No. 1 undertaken for comparative purpose, a stainless steel-made polymerization reactor of 100 liter capacity equipped with a stirrer was provided prior to the introduction of the polymerization mixture with a coating film on the surface of the inner walls with a coating solution prepared by dissolving an organic dye compound or a combination of two organic dye compounds in a weight proportion indicated in Table 1 below in a concentration of 0.5 % by weight in methyl alcohol as the solvent which was then admixed with a solution or dispersion of a silicic acid compound indicated in Table 1 in a small volume of water to give a weight ratio of the dye compound to the silicic acid compound indicated in the same table followed by drying at 60 °C for 15 minutes and washing with water.

Into the thus coating-treated polymerization reactor were introduced 40 kg of water, 18 kg of vinyl chloride and

- 12 -

0164883

2 kg of vinyl acetate and the mixture was heated at 45 °C. The polymerization reaction was started by adding 200 g of ammonium persulfate and 60 g of sodium hydrogensulfite into the thus heated polymerization mixture kept under an atmosphere of nitrogen gas. After 5 hours of the polymerization reaction performed at the same temperature, the polymerizate slurry was discharged out of the reactor and the amount of the polymer scale deposited on the reactor walls was examined to give the results shown in Table 1.

Example 2 (Experiments No. 18 to No. 23).

In each of the experiments excepting No. 18 undertaken for comparative purpose, the inner walls of the same polymerization reactor as used in Example 1 were coated with the same coating solution as that used in one of the Experiments in Example 1 followed by drying. The coating solutions used here were those used in Experiments No. 2, No. 5, No. 13, No. 10 and No. 15 of Example 1 for Experiments No. 19 to No. 23, respectively, in this Example.

Into the thus coated polymerization reactor were introduced 50 kg of water and 20 kg of acrylonitrile and the mixture was heated at 50 °C. The polymerization reaction was started by adding 200 g of potassium persulfate and 40 g of sodium sulfite into the thus heated polymerization mixture kept under an atmosphere of nitrogen gas with agitation.

After 5 hours of the polymerization reaction performed at the same temperature, the polymerizate slurry was discharged out of the reactor and the polymerization runs were repeated each time with the same recipe as in the first run above described to examine the amount of the polymer scale deposition on the reactor walls after each run until the amount of the polymer scale deposition exceeded 1 $g/m^2$. The number of the polymerization runs performed without more than 1 $g/m^2$ of polymer scale deposition was recorded in each Experiment to give the results of 5, 11, 44, 21 and 28 runs for Experiments No. 19 to No. 23, respectively. In Experiment No. 18 conducted without any coating of the reactor walls for comparative purpose, the amount of the polymer scale deposition was found to exceed 1 $g/m^2$ even after the first run.

Example 3 (Experiments No. 24 to No. 29).

In each of the experiments excepting No. 24 undertaken for comparative purpose, the inner walls of the same polymerization reactor as used in Example 1 were coated with the same coating solution as that used in one of the Experiments in Example 1 followed by drying at 90 °C for 10 minutes. The coating solutions used here were those used in Experiments No. 2, No. 5, No. 7, No. 10 and No. 14 of Example 1 for Experiments No. 25 to No. 29, respectively, in this Example.

Into the thus coated polymerization reactor were introduced 400 kg of water, 200 kg of vinyl chloride and 130 g of potassium persulfate and the polymerization reaction was performed at 57 °C for 15 hours with agitation.

After completion of a run of the polymerization reaction as above, the polymerizate slurry was discharged out of the reactor and the polymerization reaction was repeated with the same recipe as above until the amount of the polymer scale deposition exceeded 1 g/m$^2$ on the reactor walls. The number of the polymerization runs performed without more than 1 g/m$^2$ of the polymer scale deposition was recorded in each Experiment to give the results of 1, 3, 1, 10 and 12 runs for Experiments No. 25 to No. 29, respectively. In Experiment No. 24 conducted without any coating of the reactor walls for comparative purpose, the amount of the polymer scale deposition was found to exceed 1 g/m$^2$ even after the first run.

Table 1

| Experiment No. | Organic dye(s) (A) (weight ratio) | Silicic acid compound (B) | (A)/(B) weight ratio | Amount of scale deposition, $g/m^2$ |
|---|---|---|---|---|
| 1 | None. | | | 1200 |
| 2 | C.I. Solvent Black 5 | | | 15 |
| 3 | C.I. Basic Orange 14 | | | 14 |
| 4 | C.I. Acid Black 2 | | | 11 |
| 5 | C.I. Acid Black 2 + Solvent Black 5 (8:2) | | | 27 |
| 6 | C.I. Solvent Black 7 | | | 13 |
| 7 | C.I. Solvent Blue 2 | | | 18 |
| 8 | C.I. Solvent Green 1 | | | 25 |
| 9 | C.I. Basic Blue 54 | | | 16 |
| 10 | C.I. Solvent Black 5 | Sodium silicate | 5:5 | 0 |
| 11 | C.I. Basic Orange 14 | Sodium silicate | 1:9 | 0 |
| 12 | C.I. Acid Black 2 | Sodium silicate | 9:1 | 2 |
| 13 | C.I. Acid Black 2 | Colloidal silica | 5:5 | 0 |
| 14 | C.I. Solvent Black 7 + Solvent Black 5 (8:2) | Colloidal silica | 1:9 | 0 |
| 15 | C.I. Solvent Blue 2 | Colloidal silica | 9:1 | 0 |
| 16 | C.I. Solvent Green 1 | Colloidal silica | 5:5 | 0 |
| 17 | C.I. Basic Blue 54 | Colloidal silica | 5:5 | 0 |

CLAIMS

1.   A method for the polymerization of a vinylic monomer in an aqueous polymerization medium by the procedure of water polymerization which comprises the steps of:

(a) coating the surface of the reactor walls with a coating solution containing an organic dye compound;

(b) drying the thus coated surface to form a coating film of the organic dye compound;

(c) introducing water, a vinylic monomer and a polymerization initiator without addition of an emulsifying agent and suspending agent into the reactor to form a polymerization mixture; and

(d) heating the polymerization mixture under agitation to effect polymerization of the monomer.

2.   The method as claimed in claim 1 wherein the coating solution further contains a silicic acid compound in an amount from 0.01 to 10 parts by weight per part by weight of the organic dye compound.

3.   The method as claimed in claim 1 or 2 wherein the amount of the coating film formed on the reactor walls is at least 0.01 g/m$^2$ as dried.